Europäisches Patentamt

European Patent Office

Office européen des brevets

(19)

(11) Veröffentlichungsnummer : **0 520 948 A1**

## (12) EUROPÄISCHE PATENTANMELDUNG

(21) Anmeldenummer : 92810476.9

(22) Anmeldetag : 23.06.92

(51) Int. Cl.$^5$ : **B22D 25/02**, B22C 9/04, B29D 1/00, B65G 33/26, B22D 17/22

(30) Priorität : 24.06.91 CH 1853/91

(43) Veröffentlichungstag der Anmeldung :
30.12.92 Patentblatt 92/53

(84) Benannte Vertragsstaaten :
CH DE FR IT LI NL

(71) Anmelder : Wenger, Peter
Sandstrasse
CH-3937 Baltschieder (CH)

(71) Anmelder : Bayard, Karl
Weingartenstrasse 12a
CH-3904 Naters (CH)

(72) Erfinder : Wenger, Peter
Sandstrasse
CH-3937 Baltschieder (CH)
Erfinder : Bayard, Karl
Weingartenstrasse 12a
CH-3904 Naters (CH)

(74) Vertreter : Keller, René, Dr. et al
Patentanwälte Dr. René Keller & Partner
Postfach 12 Marktgasse 31
CH-3000 Bern 7 (CH)

(54) Förderschnecke, Förderschneckenlängsteilstück, Verfahren zur Herstellung einer Förderschnecke sowie eines Förderschneckenlängsteilstückes und Gussform zum Giessen eines Förderschneckenlängsteilstücks.

(57) Die Förderschnecke (5) eines Schneckenförderers (3) zum Fördern eines Guts ist aus mehreren gegossenen Förderschneckenlängsteilstückken (6) zusammengesetzt. Der Schneckenkern (15) und die Förderwendel jedes Förderschneckenlängsteilsstücks (6) sind als einstückiges Gußteil ausgebildet und die Förderwendelenden benachbarter Förderschneckenlängsteilstücke (6) sind annähernd über ihre gesamte radiale Länge miteinander formschlüssig verbunden.

Eine Dauergußform zum Gießen der Förderschneckenlängsteilstücke hat zwei je eine wendelförmige Begrenzungsfläche aufweisende Gußformteile. Wenigstens eine der wendelförmigen Begrenzungsflächen hat an ihrem äußeren Randereich einen entlang des gesamten Randbereichs gleich breit verlaufenden Absatz, damit das mit der Gußform gegossene Förderschneckenlängsteilstück am freien Außenbereich der Wendel eine Dichtlippe aufweist.

EP 0 520 948 A1

Fig.1

EP 0 520 948 A1

Die Erfindung betrifft eine Förderschnecke, ein Förderschneckenlängsteilstück, ein Verfahren zur Herstellung einer Förderschnecke sowie eines Förderschneckenlängsteilstücks und eine Gußform zum Gießen eines Förderschneckenlängsteilstücks gemäß der Oberbegriffe der Patentansprüche 1, 6, 7, 8, 9, 10 und 11.

Förderschnecken, deren Förderwendel mit einem Rohr umgeben ist, werden als Schneckenförderer eingesetzt. Die Rohr- und Förderschneckenachse fallen zusammen. Um flüssiges, teilflüssiges oder granuläres Gut von einem Rohrende zum anderen zu befördern, kann nun nur die Förderschnecke rotieren und das Rohr feststehend sein oder das Rohr und die Förderschnecke zusammen rotieren. Der Schneckenförderer kann auch dazu verwendet werden, Gut von einem tieferen zu einem höheren Niveau, wie es bereits schon im Altertum mit der sog. Archimedischen Schraube erfolgte, zu transportieren.

Aus der EP-A 0 138 066, der EP-A 0 291 715, der US-A 3 705 644, der FR-A 1 458 145, der FR-A 1 580 350, der US-A 1 090 956, der US-A 2 394 163, der EPA 0 082 899, der US-A 3 178 210, der US-A 2 492 915 und der US-A 233 320 ist bekannt, eine Förderschnecke aus mehreren Förderschneckenlängsteilstücken zusammenzusetzen.

Bei den in der EP-A 0 138 066, der EP-A 0 291 715 und der US-A 233 320 beschriebenen Förderschnecken wurden die Förderschneckenlängsteilstücke der Reihe nach auf eine Welle gesteckt und durch ein jeweils an den äußersten Förderschneckenlängsteilstücken angreifendes Spannelement verdrehfest gegeneinander verspannt.

Bei der US-A 3 705 644 und der US-A 3 178 210 hatten die einzelnen Förderschneckenlängsteilstücke einen zentrischen profilierten Innendurchbruch, durch den eine mit hierzu passender Profilierung versehene Welle bzw. Bolzen geschoben wurde. Über diese Profilierung wurde die für die Förderung notwendige Drehbewegung von der Welle auf die Förderschneckenlängsteilstücke übertragen.

In der FR-A 1 458 145 und der FR-A 1 580 350 ist eine Förderschnecke beschrieben, bei der die Förderschneckenlängsteilstücke auf ein Seil aufgefädelt wurden. Die Übertragung der Drehbewegung vom Seil auf die Förderschneckenlängsteilstücke erfolgte in der FR-A 1 458 145 über eine die beiden Bauteile verbindende Schraube. Die in der FRA 1 580 350 beschriebenen Förderschneckenlängsteilstücke wurden durch Kupplungselemente an den Schneckenkernstirnseiten drehfest miteinander verkuppelt.

Gemäß der US-A 1 090 956 und der EP-A 0 082 899 wurden die Förderschneckenlängsteilstücke auf einen Dorn aufgespannt und untereinander analog zur FR-A 1 580 350 mit Kupplungselementen verkuppelt.

In der US-A 2 492 915 wurden Kupplungselemente in den Schneckenkernstirnseiten benachbarter Förderschneckenlängsteilstück beschrieben. Die stumpf aneinander stoßenden Förderwendelenden der Längsteilstücke wurden nahezu punktförmig mit einem Klammerelement zusammengehalten.

Die US-A 2 394 163 zeigte benachbarte Förderschneckenlängsteilstück, welche lediglich durch an der Stirnseite des Wendelkerns angeordnete Kupplungselemente drehfest verkuppelt wurden. Benachbarte Wendelenden stoßen stumpf zusammen und waren, um ein seitliches Verrutschen der Förderschneckenlängsteilstück zu verhindern mit einer radialen Stufe ausgerüstet.

In der US-A 546 879 und der US-A 525 194 ist eine nicht gattungsgemäße Förderschnecke beschrieben, bei der nur die Wendelteilstücke auf einer Welle angeordnet wurden, wobei benachbarte Wendelteilstücke an ihren radialen Enden verzahnt waren.

Bei den bekannten aus Förderschneckenlängsteilstücken erzeugten Förderschnecken tritt insbesondere bei der Förderung flüssigen Guts ein Rücklaüf des zu fördernden Guts zwischen den einzelnen Förderschneckenlängsteilstücken auf.

Die Erfindung, wie sie in den Patentansprüchen gekennzeichnet ist, löst die Aufgabe, eine Förderschnecke, erzeugt aus mehreren Förderschneckenlängsteilstücken, zu schaffen, welche einerseits preisgünstig herstellbar und bei der der Rücklauf des zu fördernden Guts zwischen den Förderschneckenlängsteilstücken zu vernachlässigen und eine problemlose Drehmomentenübertragung zwischen den einzelnen Förderschneckenlängsteilstücken gewährleistet ist.

Durch die Herstellung des Schneckenkerns und der Förderwendel des Förderschneckenlängsteilstücks als ein einziges Gußteil, wobei die Förderwendelenden des Gußteils jeweils derart gestaltet sind, daß eine formschlüssige Verbindung zwischen benachbarten Förderwendelenden der montierten Förderwendel erfolgt, kann kein zu förderndes Gut vom oberen zum unteren Förderschneckenlängsteilstück zurücklaufen. Ferner erfolgt die Drehmomentübertragung von einem Förderschneckenlängsteilstück zum benachbarten problemlos durch diese formschlüssige Verbindung.

Da die Förderschneckenlängsteilstücke gegossen werden, können in einem Arbeitsgang Dichtlippen am Rand der Wendelfläche mit hergestellt werden, Wird bevorzugterweise das Förderschneckenlängsteilstück aus einem elastischen Kunststoff gegossen, so können Fertigungstoleranzen des Innendurchmessers des Rohrs des Schneckenförderers ausgleichen und die Förderwendel gegen das Rohr sehr gut abgedichtet werden.

Ferner kann vorteilhafterweise als Formschluß zwischen den Wendelenden eine radiale Nut und Feder durch entsprechende Ausgestaltung der Gußform in einem Arbeitsgang erzeugt werden.

3

Jedes der einzeln mit der Dauergußform gegossenen Förderschneckenlängsteilstücke hat höchstens einen Wendelgang (Schraubengang), d.h, seine Wendel läuft mit höchstens einer vollen Umdrehung (360°) um den Wendelkern herum, Bei einem Winkel von mehr als einer vollen Umdrehung könnte ein mit einer zweiteiligen Form, deren Trennlinie entlang der Schraubenlinie der Wendel verläuft, gegossenes Förderschneckenlängsteilstück nicht mehr durch axiales Auseinanderziehen entformt werden, sondern müßte auseinander geschraubt werden. Ein Auseinanderschrauben wäre zudem noch mit großen Problemen behaftet, da die Scherhaftung an den gegossenen Oberflächen mit den Gußformteilen bedeutend höher ist als eine Haftkraft gegen axiales Auseinanderziehen. Wird weniger als eine volle Umdrehung verwendet, so kann eine Unwucht verringert werden, welche sich durch die Kupplungsteile für das Zusammenkuppeln der einzelnen Längsstücke ergeben kann.

Zur Herstellung einer metallischen, hochschmelzenden Förderwendel können Förderschneckenlängsteilstücke aus Kunststoffen oder niedrigschmelzenden nichteisenmetallgußwerkstoffen, wie Zink-, Magnesium-, Aluminium- und Kupferlegierungen als verlorene Gußformen erzeugt werden.

Werden die Gußformen derart ausgestaltet, daß axiale Durchbrüche in der Förderwendel und/oder im hohlen Schneckenkern erzeugt werden, so kann einem von einem tieferen zu einem höheren Niveau zu fördernden Gut Flüssigkeit definiert entzogen werden. Der Flüssigkeitsentzug erfolgt durch die Durchbrüche an wohl definierten Stellen und nicht wie bei den bekannten Förderwendellängsteilstücken durch nicht beherrschbare Undichtigkeitsstellen.

Werden die Durchbrüche bei schrägliegendem Schneckenförderer nur unmittelbar unterhalb der Wendel im Schneckenkern angeordnet, so kann durch diese Durchbrüche Luft in die Zwischenbereiche zwischen den Wendelgängen eindringen. Es hat sich nun überraschenderweise herausgestellt, daß mit einem derartigen Schneckenförderer flüssiges oder teilflüssiges Gut von einem tieferen zu einem höheren niveau gefördert werden kann, auch wenn die untere Öffnung des Rohrs vollständig unter den Flüssigkeitsspiegel des unteren Niveaus eintaucht. Die geförderte Menge unterscheidet sich kaum von einer Fördermenge bei teilweise offener unterer Rohröffnung. Ebenfalls unterscheidet sich die Fördermenge nicht, falls die untere Niveauhöhe schwankt. Eine Reduktion der Fördermenge tritt nur durch kurzzeitiges Auslaufen durch die Durchbrüche ein, die jedoch in ihrem Querschnitt kleingehalten werden können. Zur Verbesserung können die Durchbrüche auch mit einfachen Klappenventilen versehen werden, welche Luft einlassen, aber keine Flüssigkeit auslaufen lassen.

Im folgenden werden Beispiele einer erfindungsgemäßen Förderschnecke, eines Förderschneckenlängsteilstücks, eines Verfahrens zur Herstellung einer Förderschnecke sowie eines Förderschneckenlängsteilstücks und einer Gußform zum Gießen des Förderschneckenlängsteilstücks anhand von Zeichnungen näher erläutert. Es zeigen:

Fig. 1 eine aus mehreren (fünf) Förderschneckenlängsteilstücken zusammengesetzte Förderschnecke eines Schneckenförderers,

Fig. 2 eine Draufsicht auf eines der Förderschneckenlängsteilstücke der in **Figur 1** dargestellten Förderschnecke,

Fig. 3 eine perspektivische Seitenansicht des in **Figur 2** dargestellten Förderschneckenlängsteilstücks, wobei einige der nicht sichtbaren Konturen zum besseren Verständnis gestrichelt dargestellt sind,

Fig. 4 einen Längsschnitt durch das in **Figur 3** dargestellte Förderschneckenlängsteilstück,

Fig. 5 einen Längsschnitt durch eine Gußform im verkleinerten Maßstab zum Gießen eines Förderschneckenlängsteilstücks, wobei deren teilzylindrische Gußformteile nicht geschnitten, aber in zusammengeschobener Gießstellung dargestellt sind,

Fig. 6 einen Längsschnitt analog zu **Figur 5**, wobei jedoch auch die teilzylindrische Gußformteile geschnitten dargestellt sind,

Fig. 7 einen Längsschnitt in vergrößertem Maßstab analog zu **Figur 6** zur Darstellung einer zu gießenden Dichtlippe am Förderschneckenlängsteilstück,

Fig. 8 eine perspektivische Draufsicht auf eine Verbindung zweier Wendelenden zweier Förderschneckenlängsteilstücke im vergrößerten Maßstab, und

Fig. 9 einen Längsschnitt durch eine Variante eines Förderschneckenlängsteilstücks.

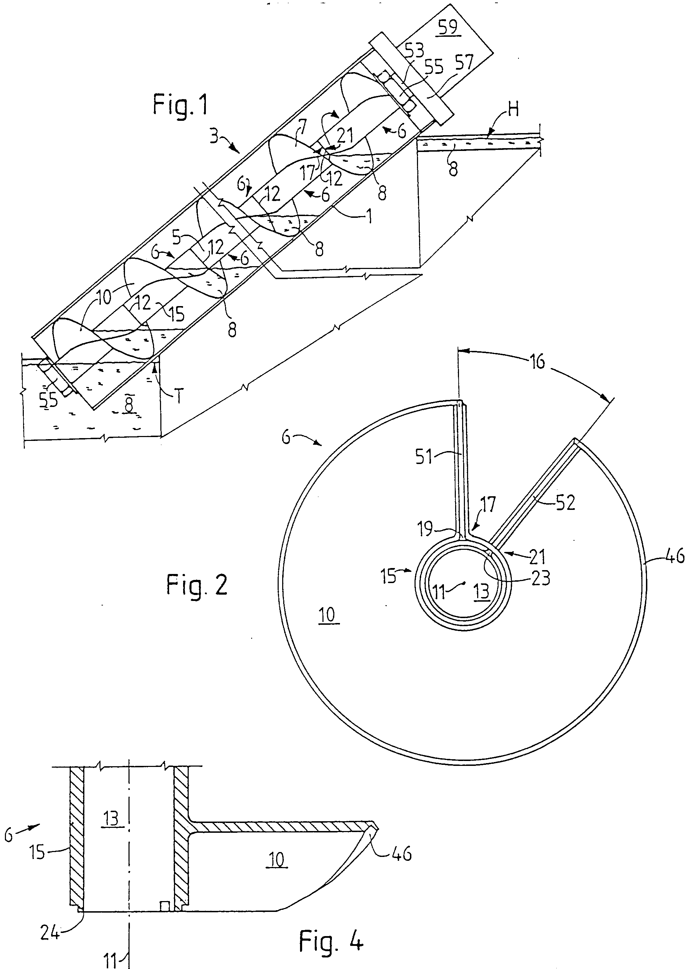

Die in **Figur 1** in einem aufgeschnittenen Rohr **1** eines Schneckenförderers **3** dargestellte Förderschnecke **5** ist aus mehreren (fünf dargestellten) gegossenen identischen Förderschneckenlängsteilstücken **6** aus Kunststoff derart zusammengefügt, daß die Förderwendel **7** stetig fortläuft. Der Schneckenförderer dient dazu, von einem tieferen niveau **T** flüssiges, teilflüssiges oder granuläres Gut **8** zum höheren niveau **H** zu fördern. Die Trennstellen zwischen den einzelnen Teillängsstücken **6** sind in **Figur 1** mit **12** bezeichnet.

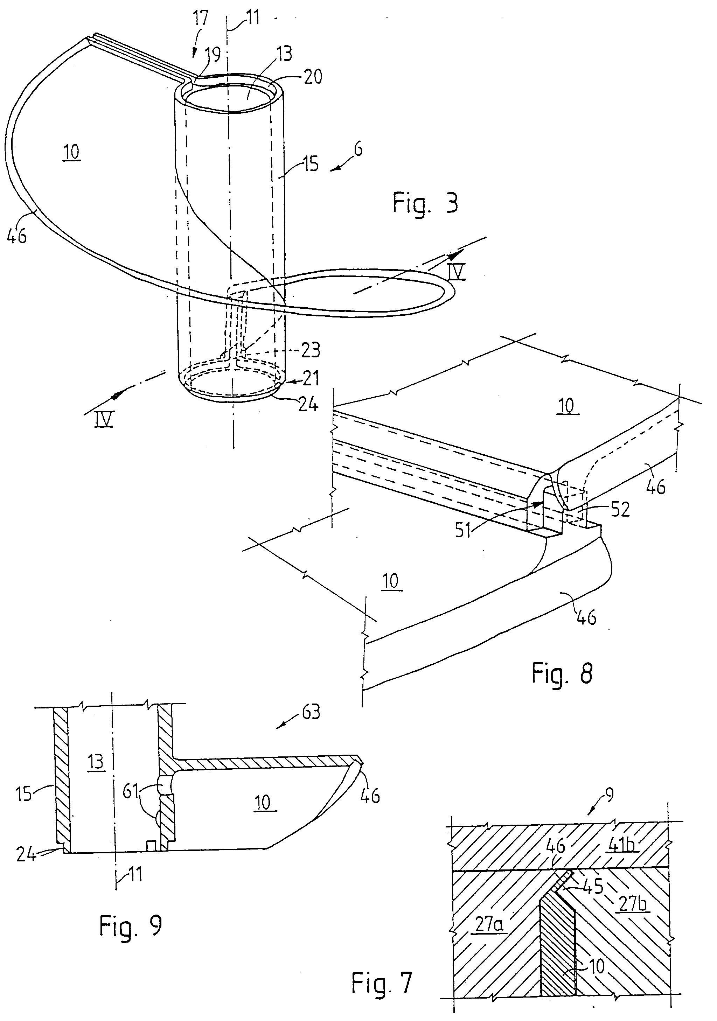

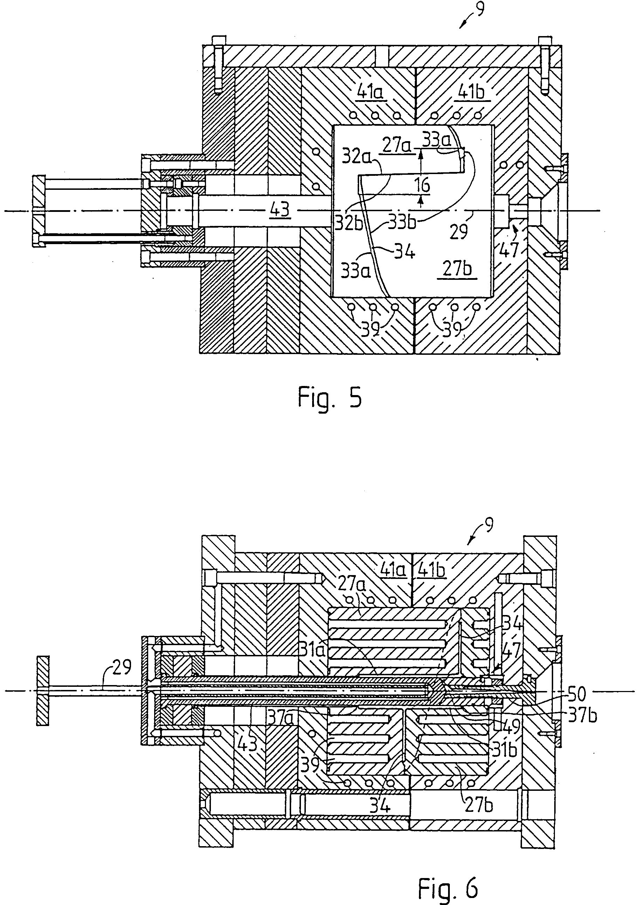

Jedes in einer unten beschriebenen Dauergußform **9** gegossene Förderschneckenlängsteilstück **6** hat, wie in einer Draufsicht in **Figur 2** und in einer perspektivischen Seitenansicht in **Figur 3** dargestellt ist, ein Wendelstück **10**, welches im zusammengesteckten Zustand mit den benachbarten Wendelstücken eine fortlaufende Förderwendel 7 ergibt, und einen koaxial zur Achse 11 angeordneten mit einer koaxialen Durchgangsöffnung 13 versehenen Schneckenkern 15. Das Wendelstück 10 hat einen Schraubenwinkel, der um einen Versatzwinkel 16 von 40° kleiner als eine volle Umdrehung (360°) ist.

An dem in **Figur 3** oben befindlichen Ende des Förderschneckenlängsteilstücks 6 ist ein weibliches Kupplungsteil 17 mit einem im Schneckenkernmantel axial verlaufenden Schlitz 19 und einem den Querschnitt der Durchgangsöffnung 13 vergrößernden Absatz 20 angeordnet. Am unteren Ende des Förderschneckenlängsteilstücks 6 ist ein männliches Kupplungsteil 21 mit einem zum Schlitz 19 entsprechenden Ansatz 23 und ein den Außendurchmesser des Schneckenkerns 15 verringernden Absatz 24 entsprechend Absatz 20 angeordnet. Durch den Ansatz 23 und den hierzu passenden Schlitz 19 ist ein gegenseitiges Verdrehen ineinandergesteckter Förderschneckenlängsteilstücke 6 ausgeschlossen.

Der Versatzwinkel 16 dient dazu, daß der Schlitz 19 und der Ansatz 23 sich nicht immer auf derselben Mantellinie des Schneckenkerns 15 befinden. Hierdurch soll eine Unwucht der zusammengesteckten Förderschnecke 5 reduziert werden, Der Schlitz 19 bzw. der Ansatz 23 lassen sich zum Ankoppeln eines Antriebes für die Förderschnecke 5 verwenden.

Entlang des Rand jedes Wendelstücks 10 verläuft eine Dichtlippe 25, wie sie in den **Figuren 2** und 3 angedeutet sowie im Längsschnitt durch ein Wendelstück 10 in **Figur 4** und in **Figur 7** zusehen ist. Die Dichtlippe 25 dient dazu ein Absinken des flüssigen, teilflüssigen bzw. ganulären Guts entlang der Innenwand des Rohres 1 zu verhindern sowie Fertigungstoleranzen des Innendurchmessers des Rohrs 1 auszugleichen.

Die zur Herstellung der Wendelstücke 10 verwendete, in den **Figuren 5** und 6 im Schnitt dargestellte Dauergußform 25 hat zwei teilzylindriche Gußformteile 27a und 27b, deren Zylinderachsen 29 zusammenfallen und mit der Achse 11 der Förderschnecke 5, des Längsstückes 6 sowie des Rohrs 1 identisch sind, Die beiden teilzylindrischen Gußformteile 27a und 27b haben gleichen Durchmesser und je eine koaxiale Durchgangsöffnung 31a und 31b, die mit der Durchgangsöffnung des jeweils anderen Gußformteiles fluchtet. Jedes teilzylindriche Gußformteil 27a bzw, 27b hat als Begrenzungsfläche für das zu gießende Wendelstück 10 eine Schraubenfläche 33a bzw, 33b, welche annähernd deckungsgleich zu derjenigen des anderen Gußformteils verläuft und eine Verbindungsfläche 32a bzw, 32b, welche die beiden axialen Enden jeder Schraubenfläche 33a bzw, 33b miteinanderverbindet. Die Verbindungsflächen 32a und 32b sowie die Schraubenflächen 33a und 33b verlaufen von der Mantelfläche der Gußformteile 27a bzw. 27b zur Innenwandung der betreffenden Durchgangsöffnung 31a bzw. 31b. Die beiden Gußformteile 27a und 27b sind derart ineinandergesteckt, daß zwischen den beiden Verbindungsflächen 32a und 32b ein gießtechnisch irrelevanter Spalt und zwischen den beiden Schraubenflächen 33a und 33b ein wendelförmiger Spalt 34 verbleibt, dessen Spaltbreite der Dicke der Förderwendel 7 des zu gießenden Längsstücks 6 entspricht. Die Schraubenflächen 33a und 33b jedes teilzylindrischen Gußformteils 27a und 27b haben einen Schraubenwinkel, der kleiner als 360° ist, d. h. wie in **Figur 5** zusehen ist, um den bereits oben erwähnten Versatzwinkel 16 von bevorzugt 40° verkleinert ist.

Die beiden teilzylindrischen Gußformteile 27a und 27b werden durch Funkenerosion, wie z. B. im Taschenbuch für den Maschinenbau/Dubbel, Hersg. von W. Beitz u, K.-H. Küttner, 16 Aufl. - Heidelberg; New York; London, Paris; Tokyo: Springer, 1987, Seite S64 beschrieben, hergestellt, wobei ein funkenerodierendes, nicht dargestelltes Werkzeug entlang eines schraubenlinienförmigen Wegs durch einen Zylinder bewegt wird, der dem Schraubenwinkel des Wendelstücks 10 entspricht. Der Zylinder hat eine Durchgangsöffnung, welche den Durchgangsöffnungen 31a und 31b entspricht und einen Außendurchmesser, der dem Durchmesser der herzustellenden Gußformteile 27a und 27b entspricht. Der Breite des erodierte Spalts 34 entspricht der Dicke des zu gießenden Förderstücks 10.

An dem in **Figur 6** rechten Ende des schraubenlinienförmigen Spalts 34 ist in der Wandung der Durchgangsöffnungen 31a und 31b ein männliches Kupplungsnegativgußteil 37a und an dem linken Ende ein weibliches Kupplungsnegativgußteil 37b ausgebildet, um das weibliche bzw. männliche Kupplungsteil 17 bzw. 21 an den Stirnseiten der Längsstücke 6 gießen zu können. Das männliche Kupplungsnegativgußteil 37a und das weibliches Kupplungsnegativgußteil 37b haben ferner je ein nicht explicit dargestelltes aufeinander abgestimmtes negativgßelemente zum Formen des Schlitzes 19 bzw. des Ansatzes 23 an den betreffenden Kupplungsteilen 17 bzw. 21. Die negativgußelemente sind um den Versatzwinkel 16 gegeneinander versetzt, um eine durch die Kupplungsteile 19 bzw. 21 an den Teillängsstücken 6 entstehende Unwucht weitgehend zu eliminieren.

Die beiden teilzylindrischen Gußformteile 27a und 27b sind durch in den **Figuren 5** und 6 angedeutete Kühlkanäle 39 kühlbar und von einer zweigeteilten Gußgrundform 41a und 41b umgeben. Der Gußformteil 27a ist durch einen Auszieher 43 zum Herausnehmen des gegossenen Längsstückes 6 axial vom Gußformteil 27b wegziehbar und nach dem Entnehmen wieder auf diesen 27b zu bewegbar.

Die schraubenförmige Begrenzungsfläche des teilzylindrischen Gußformteils 27b hat, wie in Figur 7 dargestellt, an ihrem längsverlaufenden Randbereich einen entlang des gesamten Randbereichs gleichbreit verlaufenden Absatz 45, damit das mit der Gußform 9 gegossene Längsstück 6 an den freien längsverlaufenden Enden seines Wendelstücks **10** eine Dichtlippe **46** aufweist.

Der Auszieher **43** steckt bei geschlossenen Gußformteilen **27a** und **27b** bis zu etwa einer Höhe von zwei Dritteln in den beiden Durchgangsöffnungen **31a** und **31b**. An den Auszieher **43** schließt ein ebenfalls den Durchmessern der Durchgangsöffnungen **31a** und **31b** angepaßter Einspritzdorn **47** mit drei Kunststoffeinspritzdüsen an, von denen eine mit der Bezugszahl **49** in **Figur 6** dargestellt ist. Durch einen axialen Einspritzkanal **50** im Einspritzdorn **47** und die drei Einspritzdüsen **49** wird der flüssige Kunststoff zum Gießen des Längsstücks **6** eingespritzt. Der Einspritzdorn **47** und der Auszieher **43** formen die Durchgangsöffnungen **31a** und **31b** bei dem zu gießenden Längsstück **6** und dienen als Führungselement für die beiden Gußformteile **27a** und **27b**.

Der Anschluß des axialen Endes eines Wendelstücks **10** an das folgende Wendelstücks **10** erfolgt, wie in **Figur 8** dargestellt, durch radiales Verklammern der beiden Enden mit einer radial verlaufenden Nut **51**, in die eine radial verlaufende Feder **52** paßt. Anstelle die Nut **51** und die Feder **52** nur ineinanderzupressen, kann auch ein nicht dargestellter Clipverschluß verwendet werden. Durch die formschlüssige Verklammerung der Wendelenden über ihre annähernd gesamte Breite hinweg, ist eine gute Übertragung des Drehmoments während des Förderns gewährleistet.

Zur Herstellung einer Förderschnecke **5** werden entsprechend deren jeweils gewünschter Länge mit der oben beschriebenen Dauergußform **9** Längsstücke **6** aus Kunststoff gegossen und zu einer Förderschnecke **5** zusammengesteckt. Sollte die gesamte Förderschnecke **5** zu lang sein, kann das am Ende der Förderschnecke **5** befindliche Längsstück **6** auf die geforderte Länge abgelenkt werden. Über die Förderschnecke **5** wird je nach deren Länge ein Rohr **1** oder mehrere aneinandergeflanschte Rohre gesteckt. Anschließend wird durch die Durchgangsöffnungen **31a** und **31b** eine Welle **53** gesteckt, welche an ihren beiden Endbereichen je ein Gewinde mit einer Mutter **55** hat, mit denen die Längsstücke **6** zusammengepreßt werden. Jeweils nut **51** und Feder **52** an den Enden der Wendelstücke **10** werden ineinandergedrückt. An ihrem oberen Ende ist das Rohr **1** und die Welle **53** über eine Kupplung **57** mit einem Antrieb **59** verbunden.

Die Welle kann auch mit den Längsstücken **6** verklebt werden.

Wird das Rohr **1** und die Welle **53** und damit die Förderschnecke **5** in Rotation versetzt, so wird vom tieferen Niveau **T** Gut **8** zum höheren Niveau **H** gefördert.

Anstelle Rohr **1**, Welle **53** und Förderschnecke **5** in Rotation zu versetzen, kann auch nur die Welle mit der Förderschnecke **5** in Rotation versetzt werden. Auch kann außer einer Förderung von Gut **8** von einem tieferen zu einem höheren niveau auch eine Förderung von einer Seite zur anderen bei horizontal liegender Förderschnecke **5** und Rohr **1** erfolgen.

Der Schneckenkern **15** und die Durchgangsöffnungen **31a** und **31b** sind in dem oben dargelegten Ausführungsbeispiel zylindrisch ausgebildet. Beide können jedoch mit beliebigem Querschnitt, d. h. z. B. drei- oder vieleckig ausgebildet werden. Anstelle der zylindrischen Absätze **20** und **24** können auch zueinanderpassende Absätze mit mehreckigem Querschnitt oder unsymmetrischem Querschnitt verwendet werden, wobei dann die Absätze gleichzeitig als kraftschlüssige Verbindung zwischen den beiden Längsstücken dienen können, wobei dann die Welle **53** weggelassen werden kann.

Die Dicke des Wendelstücks **10** läßt sich variieren, indem die beiden Gußformteile **27a** und **27b** mehr oder weniger zusammengeschoben werden, wobei die Gußformteile **27a** und **27b** entlang ihrer Verbindungsflächen **32a** und **32b** gleiten. Eine Variation der Dicke des Wendelstücks **10** ist bei unterschiedlichen Gußwerkstoff und unterschiedlichen Einsatzgebieten der zusammengesteckten Förderschnecke **5** angezeigt.

Wendelstück **7** und/oder Schneckenkern **15** können auch Durchbrüche aufweisen. Wird ein derartiger Schneckenförderer verwendet, so ist es möglich dem von einem tieferen zu einem höheren Niveau geförderten Gut Flüssigkeit zu entziehen. Die Flüssigkeit läuft dann entweder durch die Durchbrüche in die Durchgangsöffnungen **31a** und **31b** oder durch die Durchbrüche in der Wendel von Wendeletage zu Wendeletage nach unten bis zum tieferen niveau zurück.

Um die oben erwähnten Durchbrüche durch das Wendelstück gießen zu können, werden auf der Begrenzungsfläche **33a** des Gußformteils **27a** Erhebungen angebracht, deren Höhe exakt der Breite des Spalts **34** entspricht, so daß die Kopfseiten der Erhebungen satt an der Begrenzungsfläche **33b** des anderen Gußformteils **27b** anliegen.

Zum Gießen der Durchbrüche im Schneckenkern **15** sind auf den in den Gußformteilen **27a** und **27b** steckenden Teilen des Ausziehers **43** und des Einspritzdorns **47** bis an die Innenwandung der Durchgangsöffnungen **31a** und **31b** der Gußformteile **27a** und **27b** herausfahrbare und wieder einziehbare, nicht dargestellte Erhebungen angebracht. Während des Gusses werden die Erhebungen an die Innenwandung angepreßt und zum Ausformen wieder in den Auszieher **43** bzw. den Einspritzdorn **47** eingezogen.

Anstelle die Durchbrüche über die gesamten Fläche des Wendelstücks **10** und/oder des Schneckenkerns **15** zu verteilen, können die Durchbrüche **61** auch, wie in **Figur 9** dargestellt, unmittelbar unterhalb des Wendelstücks **10** angeordnet werden. Wird eine Wendel mit derartigen Wendelstücken **63** in einem Schneckenförderer verwendet, so hat sich überraschenderweise herausgestellt, daß hier, obwohl die untere Öffnung des Rohrs vollständig unterhalb der Oberfläche des unteren Niveaus liegt, eine Förderung von Gut möglich ist, deren Fördermenge sich nur unwesentlich von der Fördermenge bei teilweise unten offenem Rohr unterscheidet. Es kann sogar die untere niveauhöhe ohne Beeinträchtigung der Fördermenge schwanken. Ein geringer Teil der Flüssigkeit bzw, des Guts läuft bei rotierenden d. h. förderndem Schneckenförderer nur kurzzeitig während eines Umdrehungsteilbereiches aus. Wird ein einfaches nicht dargestelltes Klappenventil an den Durchbrüchen angeordnet, welches Luft einläßt, aber gegen auslaufende Flüssigkeit sperrt, so kann dieser Verlust vollständig unterbunden werden.

Rotieren beim Schneckenförderer Rohr und Förderschnecke zusammen so kann, anstelle eines zylindrischen Rohrs eine Umhüllung beliebigen Querschnitts, jedoch mit senkrecht zur Längsrichtung bis auf eine Toleranz identischen querschnitt verwendet werden. Die Förderschnecke ist dann dem Rohrquerschnitt angepaßt. Die oben beschriebenen Gußformteile **27a** und **27b** sind dann nicht mehr teilzylindrisch, sondern haben eine der Innenwandung der Umhüllung entsprechende Kontur. Werden z. B. dreieckige, viereckige, etc. Querschnitte verwendet, so kann z. B. ein besseres Durchmischen des Gutes während des Förderns erreicht werden.

Zur Herstellung einer Förderschnecke aus niedrigschmelzenden Nichteisenmetallgußwerkstoffen, wie Zink-, Magnesium-, Aluminium- und Kupferlegierungen sowie aus schmelzbarem Kunststoff kann mit der oben beschriebenen Dauergußform **9** gearbeitet werden. Soll jedoch eine Förderschnecke aus einem hochschmelzenden Werkstoff, deren Schmelztemperatur über 800°C liegt, wie z. B. bei allen Eisenmetallgußwerkstoffen, hergestellt werden, so kann nicht mehr mit der oben beschriebenen Dauergußform **9** gearbeitet werden. In diesem Fall kann mit der obigen Dauergußform **9** ein sogenanntes verlorenes Modell aus Wachs, Kunststoff oder aus einem vergasbaren Polystyrolschaum hergestellt werden, welches dann zur Herstellung einer verlorenen Gußform z. B. beim Feingießverfahren zum Hinterfüllen oder zur Schalenbildung verwendet wird, wie es z. B. im Taschenbuch für den Maschinenbau/Dubbel, Hersg. von W. Beitz u. K.-H. Küttner, 16 Aufl, - Heidelberg; new York; London, Paris; Tokyo: Springer, 1987, Seite S 7 beschrieben ist.

## Patentansprüche

1. Förderschnecke (5) zusammengesetzt aus mehreren Förderschneckenlängsteilstücken (6) zum Fördern eines Guts (8) in einem Schneckenförderer (3), **dadurch gekennzeichnet**, daß der Schneckenkern (15) und die Förderwendel (10) jedes Förderschneckenlängsteilstücks (6) als einstückiges Gußteil gebildet sind und die Förderwendelenden benachbarter Förderschneckenlängsteilstücke (6) annähernd über ihre gesamte radiale Länge miteinander formschlüssig verbunden sind.

2. Förderschnecke (5) nach Anspruch 1, **dadurch gekennzeichnet**, daß jedes der bevorzugt aus einem elastischen Kunststoff gegossenen Förderschneckenlängsteilstücke (6) entlang des äußeren Rands der Förderwendel (10) eine Dichtlippe (46) aufweist, welche dichtend an die Innenwandung eines die Förderschnecke (5) umschließenden Rohres (1) des Schneckenförderers (3) drückbar ist.

3. Förderschnecke (5) nach Anspruch 1 oder 2, **dadurch gekennzeichnet**, daß der Schneckenkern (15) eine parallel zur Förderschneckenachse (11) verlaufende, bevorzugt zentrisch angeordnete offene Durchgangsöffnung (13) aufweist, welche über Durchbrüche (61) mit der Schneckenkernaußenfläche verbunden ist.

4. Förderschnecke (5) nach Anspruch 3, **dadurch gekennzeichnet**, daß die Durchbrüche (61) unmittelbar unterhalb des Förderwendelgangs in einem gegenseitigen Winkelabstand von höchstens 180° angeordnet sind.

5. Förderschnecke (5) nach Anspruch 1 bis 4, **dadurch gekennzeichnet**, daß die Förderwendel (10) durchbrochen ist.

6. Förderwendellängsteilstück (6) zum Zusammenbau zur Förderschnecke (5) nach einem der Ansprüche 1 bis 5, **dadurch gekennzeichnet**, daß der Schneckenkern (15) und die Förderwendel (10) jedes Förderschneckenlängsteilstücks (6) als einstückiges Gußteil gebildet sind und das eine Förderwendelende einen männlichen und das andere einen weiblichen oder beide einen männlichen oder weiblichen sich je über seine gesamte radiale Länge erstreckenden Verbindungsteil aufweist, der zur formschlüssigen Verbindung mit dem weiblichen bzw. männlichen Verbindungsteil des nächstfolgend anzuschließenden Förderwendellängsteilstücks **(6)** ausgebildet ist.

7. Verfahren zur Herstellung der Förderschnecke nach einem der Ansprüche 1 bis 5, **dadurch gekennzeichnet,** daß mehrere Förderschneckenlängsteilstücke **(6)** einzeln gegossen und ihre Förderwendelenden formschlüssig miteinander verbunden werden.

8. Verfahren zur Herstellung einer Förderschnecke, **dadurch gekennzeichnet**, daß mehrere Schneckenlängsteilstücke **(6)** einzeln gegossen und zu einem Förderschneckengußmodell zusammengefügt werden und dieses als verlorenes Gußmodel zum Giessen der Förderschnecke in einer Gußform verwendet wird.

9. Verfahren zur Herstellung von Förderschneckenlängsteilstücken **(6)** der Förderschnecke **(5)** nach einem der Ansprüche 1 bis 5 mit einem ersten und einem zweiten Gußformteil, **dadurch gekennzeichnet**, daß die beiden Gußformteile **(27a, 27b)** durch Funkenerosion entlang eines ersten schraubenförmigen Wegs durch einen mit einer Durchgangsöffnung **(31a, 31b)** versehenen Zylinder entsprechend dem Verlauf und der Dicke des Wendelgangs des zu gießenden Förderschneckenlängsteilstücks **(6)** und eines zweiten, die Enden des ersten Wegs verbindenden Wegs hergestellt werden.

10. Verfahren zur Herstellung von Förderschneckenlängsteilstücken der Förderschnecke nach einem der Ansprüche 1 bis 5 mit einem ersten und einem zweiten je eine wendelförmige Begrenzungsfläche **(33a, 33b)** aufweisenden Gußformteil **(27a, 27b)**, **dadurch gekennzeichnet,** daß die beiden Gußformteile **(27a, 27b)** mit je einer axialen Durchgangsöffnung **(31a, 31b)** auf einem Führungselement **(43, 47)** unter Freihaltung eines Spalts **(34)** zwischen den wendelförmigen Begrenzungsflächen **(33a, 33b)** und eines die Wandstärke des hohlen Schneckenkerns **(15)** bestimmenden Ringraums zwischen einem Teilbereich der Durchgangsöffnungen **(31a, 31b)** und des Führungselements **(43, 47)** zusammengeschoben werden, aus der Oberfläche des Führungselements **(43, 47)** beim Zusammenschieben der Gußformteile **(27a, 27b)** Distanzstücke zur Distanzierung der Innenwandung der Durchgangsöffnung **(31a, 31b)** aus der Oberfläche des Führungselements **(43, 47)** herausgedrückt werden und die Distanzstücke zum Herausnehmen des gegossenen Förderschneckenlängsteilstücks **(6)** wieder vollständig in die Oberfläche zurückgezogen werden.

11. Dauergußform mit zwei je eine wendelförmige Begrenzungsfläche **(33a, 33b)** aufweisenden Gußformteilen **(27a, 27b)** zum Gießen eines Förderschneckenlängsteilstücks der Förderschnecke nach einem der Ansprüche 1 bis 5, **dadurch gekennzeichnet**, daß die Begrenzungsfläche **(33a, 33b)** wenigstens einer der beiden Gußformteile **(27a, 27b)** im wendelförmigen äußeren Randbereich einen entlang des gesamten Randbereichs gleich breit verlaufenden Absatz **(45)** hat, damit das mit dieser Gußform gegossene Förderschneckenlängsteilstück **(6)** am freien Außenrandbereich der Wendel **(7)** eine Dichtlippe **(46)** hat.

12. Gußform nach Anspruch 11, **dadurch gekennzeichnet**, daß jedes Gußformteil **(27a, 27b)** eine Durchgangsöffnung **(31a, 31b)** aufweist, in die ein Führungselement **(43, 47)** mit einem Querschnitt, der um eine Differenz kleiner ist als der querschnitt der Durchgangsöffnung **(31a, 31b)**, axial gesteckt ist, und das Führungselement **(43, 47)** aus seiner Oberfläche heraus- und hereinbewegbare sowie an die Innenwandung der Durchgangsöffnung anpreßbare Distanzstücke hat, deren Oberfläche wenigstens teilweise der Innenwandung entsprechend gewölbt sind, um ein Förderschneckenlängsteilstück **(6)** mit einem hohlen, radial nach außen verlaufende Durchbrüche **(61)** aufweisenden Innenteil **(13)** gießen zu können.

13. Gußform nach Anspruch 12, **dadurch gekennzeichnet,** daß die Distanzstücke nur in einer Reihe unmittelbar unterhalb des Spalts **(34)** zwischen beiden Gußformteilen **(27a, 27b)** in einem Winkelabstand von höchstens 180° angeordnet sind.

Fig. 1

Fig. 2

Fig. 4

Fig. 3

Fig. 8

Fig. 9

Fig. 7

Fig. 5

Fig. 6

**Europäisches Patentamt**

## EUROPÄISCHER RECHERCHENBERICHT

Nummer der Anmeldung

EP    92 81 0476

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | EP-A-0 138 066 (THE LAITRAM CORP.) <br> * Zusammenfassung; Abbildungen 1-3,9-12 * <br> * Seite 2, Zeile 8 - Zeile 10 * <br> * Seite 4, Zeile 12 - Seite 5, Zeile 10 * <br> * Seite 5, Zeile 26 - Seite 6, Zeile 28 * <br> * Seite 8, Zeile 7 - Seite 9, Zeile 9 * <br> --- | 1,7 | B22D25/02 <br> B22C9/04 <br> B29D1/00 <br> B65G33/26 <br> B22D17/22 |
| Y | US-A-1 775 888 (J.D.CHRISTIAN) <br> * Seite 1, Zeile 55 - Seite 2, Zeile 53; Abbildungen 1-9 * <br> --- | 1,7 | |
| A | AT-A-350 467 (WOLLINGER F.) <br> * Seite 2, Zeile 39 - Seite 3, Zeile 9; Abbildung 1 * <br> --- | 3,5 | |
| A,D | EP-A-0 291 715 (THE LAITRAM CORP.) <br> * Zusammenfassung * <br> * Spalte 3, Zeile 30 - Spalte 6, Zeile 18; Abbildungen 1-12 * <br> --- | 1,7 | |
| A,D | US-A-3 705 644 (C.E.KAWCHITCH) <br> * Zusammenfassung; Abbildungen 1-5 * <br> * Spalte 1, Zeile 28 - Spalte 3, Zeile 5 * <br> --- | 1,7 | RECHERCHIERTE SACHGEBIETE (Int. Cl.5 ) |
| A,D | FR-A-1 580 350 (J.TORKAR) <br> * Seite 1, Zeile 17 - Seite 2, Zeile 20; Abbildungen 1,2 * <br> --- | 1,7 | B22D <br> B22C <br> B65G <br> B29C <br> B29D |
| A | GB-A-1 398 091 (H.D.SHARMAN) <br> * Seite 2, Zeile 17 - Zeile 97; Abbildungen 1-5 * <br> --- | 1 | |
| A | DE-A-104 888 (R.V.BROODBANK) <br> * das ganze Dokument * <br> ----- | 2 | |

Der vorliegende Recherchenbericht wurde für alle Patentansprüche erstellt

| Recherchenort | Abschlußdatum der Recherche | Prüfer |
|---|---|---|
| DEN HAAG | 05 OKTOBER 1992 | MAILLIARD A.M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument